## Europäisches Patentamt
## European Patent Office
## Office européen des brevets

(19)

(11) Veröffentlichungsnummer: **0 162 297**
**A2**

(12) **EUROPÄISCHE PATENTANMELDUNG**

(21) Anmeldenummer: **85104760.5**

(22) Anmeldetag: **19.04.85**

(51) Int. Cl.⁴: **F 16 B 12/04**

(30) Priorität: **21.04.84 DE 3415039**
**28.09.84 DE 3435676**

(43) Veröffentlichungstag der Anmeldung:
**27.11.85 Patentblatt 85/48**

(84) Benannte Vertragsstaaten:
**AT BE CH FR GB IT LI LU NL SE**

(71) Anmelder: **SPEHOMA GmbH & Co. KG**
**Theodor-Heuss-Strasse 6**
**D-4970 Bad Oeynhausen 7 (Lohe)(DE)**

(72) Erfinder: **Schierholz, Gerhard**
**Flurweg 11**
**D-4972 Löhne 3(DE)**

(74) Vertreter: **Schirmer, Siegfried**
**Osningstrasse 10**
**D-4800 Bielefeld 1(DE)**

(54) **Verfahren und Vorrichtung zum Einbringen von Leim in zylindrische Bohrungen von zu verbindenden Möbelteilen.**

(57) Der zur Herstellung der Verbindung von Möbelteilen 20 erforderliche Leim ist hermetisch in eine leicht zerstörbare Hülle eingeschlossen. Diese sogenannten Leimperlen 1 werden in einem Vibrationsförderer 2 ausgerichtet und hintereinanderliegend bzw. übereinanderliegend einer Vereinzelungsvorrichtung 6 zugeführt, über die jede Leimperle 1 einzeln in eine zylindrische Bohrung 19 eines Möbelteils 20 eingedrückt, eingepreßt oder eingeblasen wird.

Die Vereinzelungsvorrichtung 6 besteht aus einem feststehenden Teil 7 und einem darin beweglich geführten Vereinzelungsschieber 8, der eine Ausnehmung 9 für die Aufnahme einer Leimperle 1 aufweist. Über eine Einschubvorrichtung 10 wird die Leimperle 1 in das Bohrloch 19 eingedrückt bzw. eingepreßt. Hierzu dient der in einer Führung 16 geführte Einschubstößel 17. Die Leimperle 1 kann aber ebenso mittels Druckluft in das Bohrloch 19 eingeblasen werden.

Zum Einblasen ist ein flexibler Schlauch vorgesehen, der zweckmäßigerweise in Schlaufenform geführt ist. Bei Anordnung eine starren Enddüse kann die Vorrichtung als Handgerät dienen.

EP 0 162 297 A2

./...

Fig. 1

Patentanwalt

## Dipl.-Ing. Siegfried Schirmer

Zugelassener Vertreter
vor dem Europäischen Patentamt

Osningstraße 10
4800 Bielefeld 1
Telefon (05 ) 297

18.04.1985
529/59-5

Anmelder:
SPEHOMA GmbH & Co. KG
Theodor-Heuss-Straße 6
4970 Bad Oeynhausen 7

## Verfahren und Vorrichtung zum Einbringen von Leim in zylindrische Bohrungen von zu verbindenden Möbelteilen

Die Erfindung betrifft ein Verfahren zum Einbringen von Leim in zylindrische Bohrungen von zu verbindenden Möbelteilen sowie eine Vorrichtung zur Durchführung des Verfahrens.

Es sind Vorrichtungen bekannt, mit denen der Leim in die vorgebohrten zylindrischen Bohrungen einbringbar ist. Bei Verwendung dieser Vorrichtungen ist größte Sorgfalt und eine exakte Dosierung erforderlich, die leider nicht immer gegeben ist. Es läßt sich nicht ausschließen, daß Verunreinigungen der Oberflächen der zu verbindenden Teile durch Leim eintreten. Bei Unterbrechung der Leimeinbringung muß zur Vermeidung einer Verkrustung oder Aushärtung des Leims in der Vorrichtung eine teilweise recht zeitintensive Reinigung durchgeführt werden. Außerdem besteht die Gefahr, daß beim Leimeinbringen Maschinenteile benetzt werden, wodurch Störungen auftreten können.

Der Erfindung liegt die Aufgabe zugrunde, eine Vorrichtung der aufgezeigten Gattung so auszubilden, daß ein jederzeit genau dosiertes Einbringen des Leims garantiert ist und Verunreinigungen der Oberflächen durch Leim ausgeschlossen sind sowie bei Unterbrechung der

- 2 -

Leimeinbringung keine Reinigung der Vorrichtung zur Vermeidung einer Verkrustung oder Aushärtung des Leims erforderlich ist.

Die Aufgabe wird erfindungsgemäß dadurch gelöst, daß zunächst der in einer leicht zerstörbaren Hülle hermetisch eingeschlossene Leim als selbständige Leimperle einem Vibrationsförderer zugeführt wird, in dem die Leimperlen ausgerichtet und hintereinanderliegend bzw. übereinanderliegend einer Vereinzelungsvorrichtung zugeführt werden, über die jede Leimperle einzeln in eine zylindrische Bohrung eines Möbelwerkteiles eingedrückt, eingepreßt oder eingeblasen wird. Die erfindungsgemäße Vorrichtung ist dadurch gekennzeichnet, daß ein zur Aufnahme hintereinander- oder aufeinanderliegender Leimperlen dienendes Fallrohr senkrecht auf einer Vereinzelungsvorrichtung angeordnet ist, die aus einem feststehenden Teil und einem beweglich darin geführten Vereinzelungsschieber besteht, der eine entsprechend ausgebildete Ausnehmung zur Aufnahme einer Leimperle aufweist und senkrecht zur Vereinzelungsvorrichtung auf der dem Fallrohr gegenüberliegenden Seite versetzt eine Einschubvorrichtung angeordnet ist.

Damit die Leimperlen leichter in die Leimperlenaufnahme des Vereinzelungsschiebers einführbar sind, weist die zum Fallrohr weisende Seite eine konische Aufweitung auf. Die Bodenöffnung der Leimperlenaufnahme ist im Durchmesser kleiner, wobei zwischen der Wandung der Leimperlenaufnahme und der Bodenöffnung ein Absatz gebildet ist. Hierdurch liegt die Leimperle sicher in der Leimperlenaufnahme bei gleichzeitiger Möglichkeit, die Leimperle von der Bodenseite mittels der Einschubvorrichtung in das zylindrische Bohrloch des Möbelwerkteils drücken zu können.

In Ausgestaltung der Erfindung kann die in der Leimperlenaufnahme des Vereinzelungsschiebers liegende Leimperle durch einen Einschubstößel in das zylindrische Bohrloch gedrückt oder gepreßt oder als Alternativlösung durch Druckluft über eine Düse eingeblasen werden.

Bei einer bevorzugten Ausführungsform sind mehrere Vereinzelungsvorrichtungen mit dazugehörigen Einschubvorrichtungen zu einer Baueinheit zusammengeschlossen, wobei vorteilhafterweise die Vereinzelungsvorrichtungen mit den dazugehörigen Einschubvorrichtungen verstellbar angeordnet sind. Es besteht auch die Möglichkeit, die Vorrichtung als Handgerät auszubilden. Weitere Merkmale der Erfindung sind in den Unteransprüchen aufgezeigt.

Durch die Erfindung ist es möglich, in die Bohrlöcher von zu verbindenden Möbelteilen ökonomisch und problemlos Leim einzubringen, ohne daß dabei die Gefahr einer Verunreinigung der Holzflächen mit Leim besteht und die Vorrichtung bei Unterbrechung der Leimeinbringung zur Vermeidung einer Verkrustung oder Aushärtung des Leims gereinigt werden muß. Ein wesentlicher Vorteil besteht darin, daß der Leim unabhängig vom Zeitpunkt der Herstellung der eigentlichen Verbindung eingebracht werden kann. Die erfindungsgemäße Vorrichtung kann auch an bereits vorhandene Vorrichtungen, wie z. B. Dübeleinschubvorrichtungen, anstelle der bisher bekannten Leimeinbringungsvorrichtungen nachgerüstet werden.

Ein Ausführungsbeispiel einer erfindungsgemäßen Vorrichtung ist in der Zeichnung dargestellt und wird im folgenden näher beschrieben. Es zeigen:

Fig. 1 eine schematische Darstellung des Verlaufs der Leimperlen vom Vibrationsförderer bis zum zylindrischen Bohrloch des Möbelwerkteils;

Fig. 2 einen Längsschnitt durch eine Vereinzelungsvorrichtung und eine Einschubvorrichtung mit Stellung der Leimperlenaufnehme direkt unter dem Fallrohr;

Fig. 3 wie Fig. 2, jedoch mit Stellung der Leimperlenaufnahme vor dem Bohrloch;

Fig. 4 wie Fig. 3, jedoch mit eingeschobener Leimperle in das Bohrloch durch den Einschubstößel;

Fig. 5 wie Fig. 4, jedoch mit Einschubstößel in der Ausgangslage und Vereinzelungsschieber zurück in die Ausgangslage;

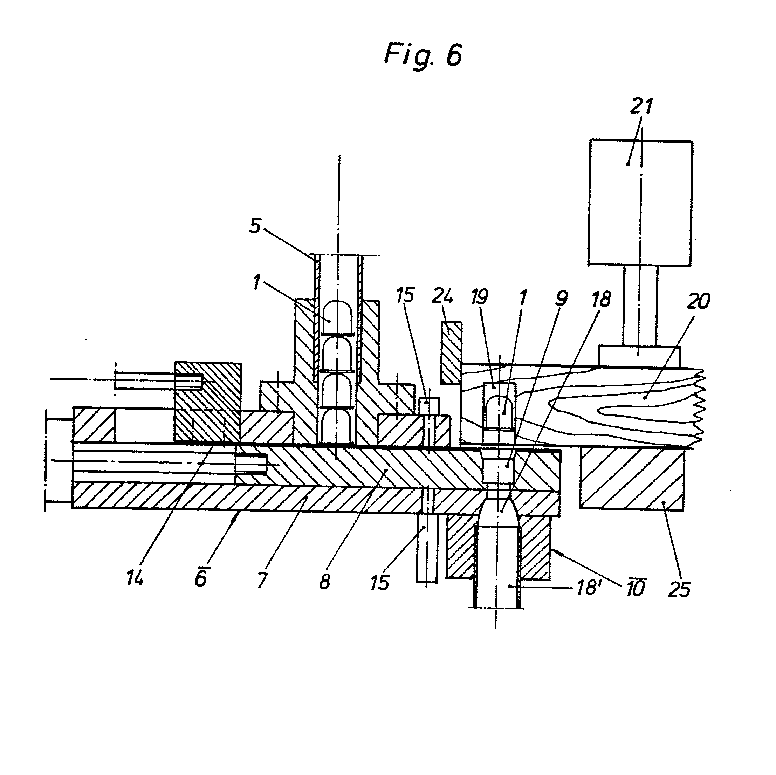

Fig. 6 eine Variante zu Fig. 5 mit einer Düse anstelle eines Einschubstößels;

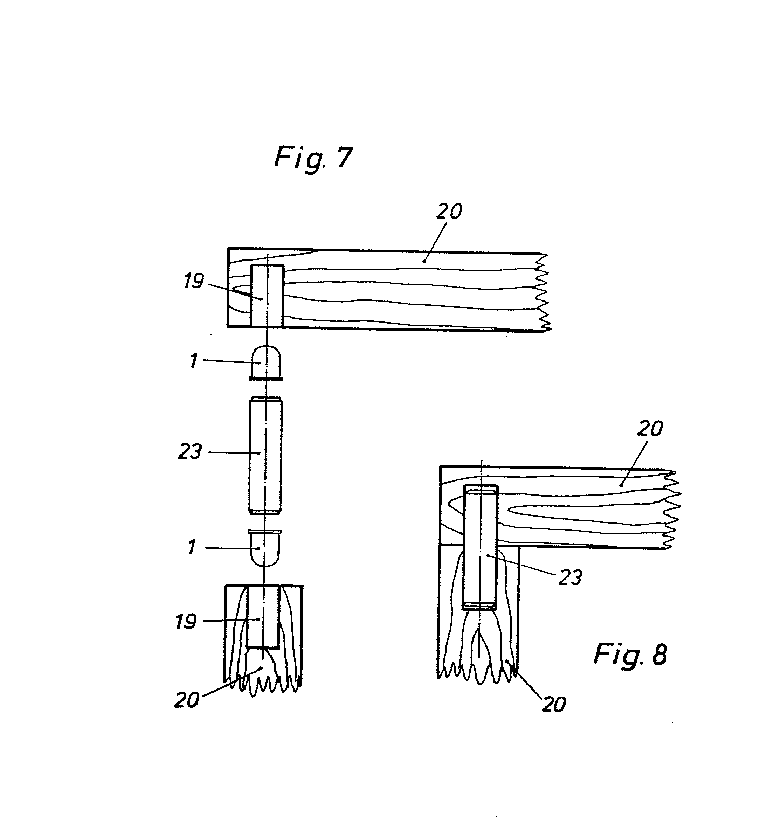

Fig. 7 eine Anwendung der Leimperlen einschließlich Dübel für die Verbindung von Kastenmöbel oder Kleinmöbel vor dem Einbringen und Zusammenfügen;

Fig. 8 wie Fig. 7, jedoch nach der Herstellung der Verbindung;

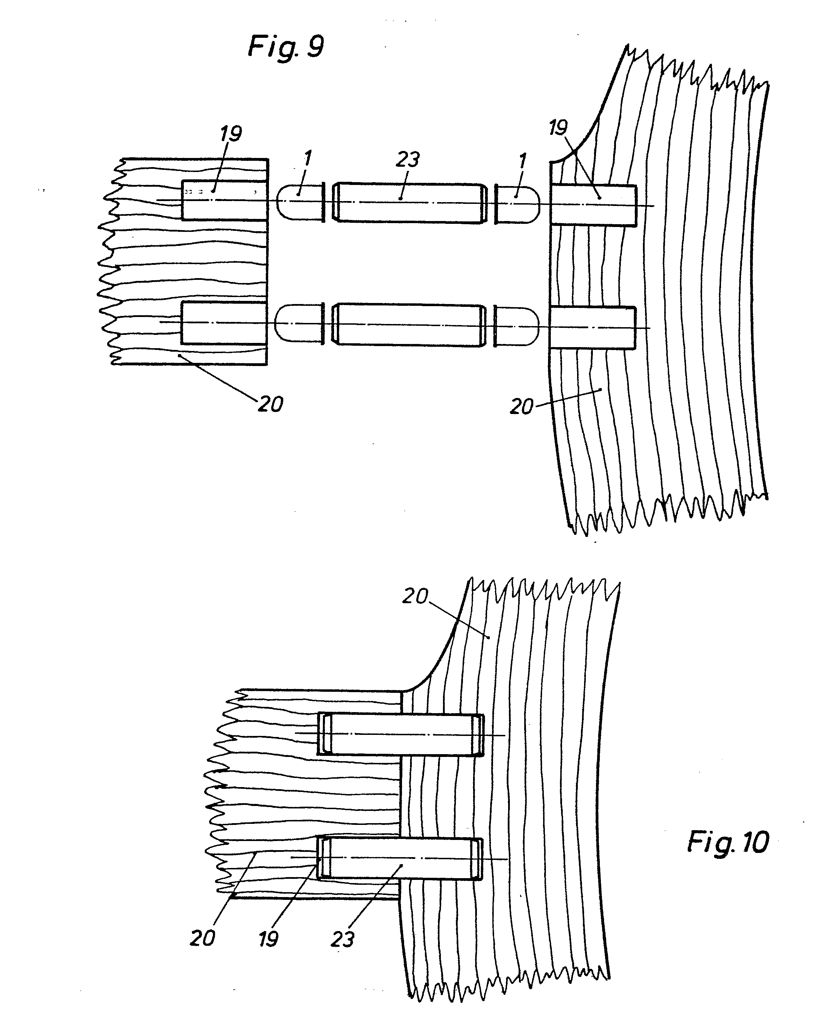

Fig. 9    wie Fig. 7, jedoch für die Verbindung von Gestellen oder Stühlen vor dem Einbringen und Zusammenfügen;

Fig. 10    wie Fig. 9, jedoch nach der Herstellung der Verbindung;

Fig. 11    eine Draufsicht auf mehrere zu einer Baueinheit verbundene Vereinzelungsvorrichtungen mit dazugehörigen Einschubvorrichtungen;

Fig. 12    eine Variante zur Fig. 11;

Fig. 13    einen Längsschnitt durch eine Vereinzelungsvorrichtung und eine Einschubvorrichtung mit anschließendem flexiblen Schlauch zur Einführung der Leimperle von unten in ein zylindrisches Bohrloch des Möbelteils;

Fig. 14    wie Fig. 13, jedoch mit Einführung der Leimperle von oben;

Fig. 15    einen Schnitt durch eine starre Enddüse;

Fig. 16    einen Schnitt gemäß Linie A - B der Fig. 14;

Fig. 17    eine Variante zur Fig. 16 und

Fig. 18    einen Schnitt durch eine starre Enddüse in der Ausbildung als handgeführte Düse.

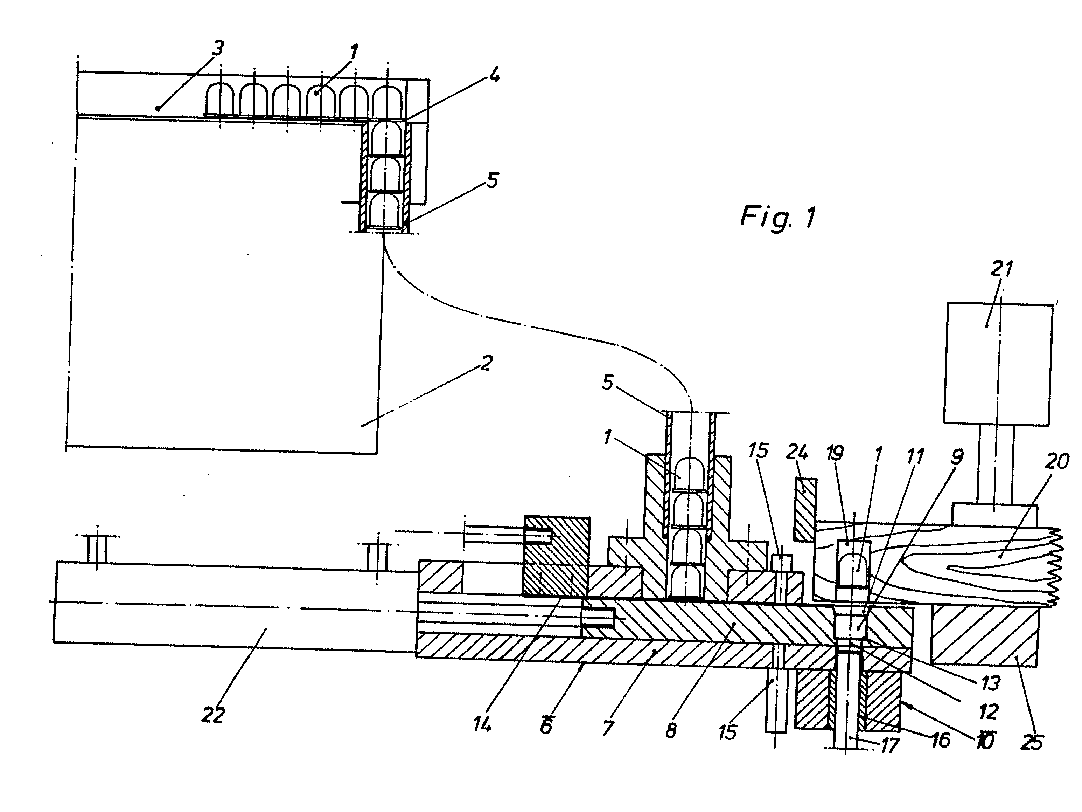

Wie aus Fig. 1 ersichtlich, werden die Leimperlen 1 in einen Vibrationsförderer 2 hintereinanderliegend nach oben in den Führungskanal 3 transportiert und von dort in der Fallposition 4 einzeln übereinanderliegend im Fallrohr 5 einer Vereinzelungsvorrichtung 6 zugeführt, über die die Leimperlen 1 einzeln in eine zylindrische Bohrung 19 eines Möbelwerkteiles 20 eingedrückt, eingepreßt oder eingeblasen werden. Die Leimperle 1 ist im Ausführungsbeispiel durch eine flexible Hülle gebildet, die hermetisch eine genau für das jeweilige Bohrloch 19 dosierte Menge Leim hermetisch umschließt und einen umlaufenden vorstehenden Ringkragen aufweist. Die erfindungsgemäße Vorrichtung ist aber auch für jede andere Form der Leimperle 1 einsetzbar, z. B. für runde Glas-Leimperlen. Die Hülle der Leimperle 1 wird beim Eintreiben des Dübels 23 zerstört und der Leim freigesetzt.

Das Fallrohr 5 ist senkrecht auf einer Vereinzelungsvorrichtung 6 angeordnet, die aus einem feststehenden Teil 7 und einem darin beweglich geführten Vereinzelungsschieber 8 besteht, der eine entsprechend ausgebildete Ausnehmung 9 für die Aufnahme einer Leimperle 1 aufweist. Der Vereinzelungsschieber 8 ist mittels eines Pneumatikzylinders 22 verschiebbar. Senkrecht zur Vereinzelungsvorrichtung 6 ist auf der dem Fallrohr 5 gegenüberliegenden Seite versetzt eine Einschubvorrichtung 10 angeordnet.

Die Einschubvorrichtung 10 kann durch einen in einer Führung 16 geführten Einschubstößel 17 gebildet sein

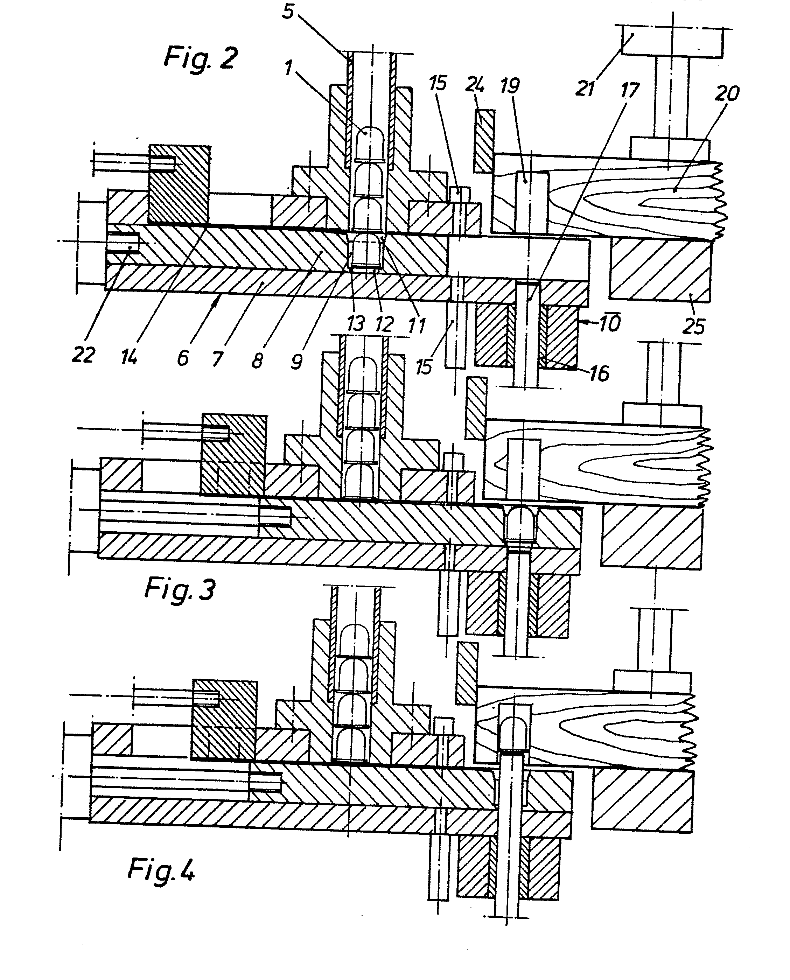

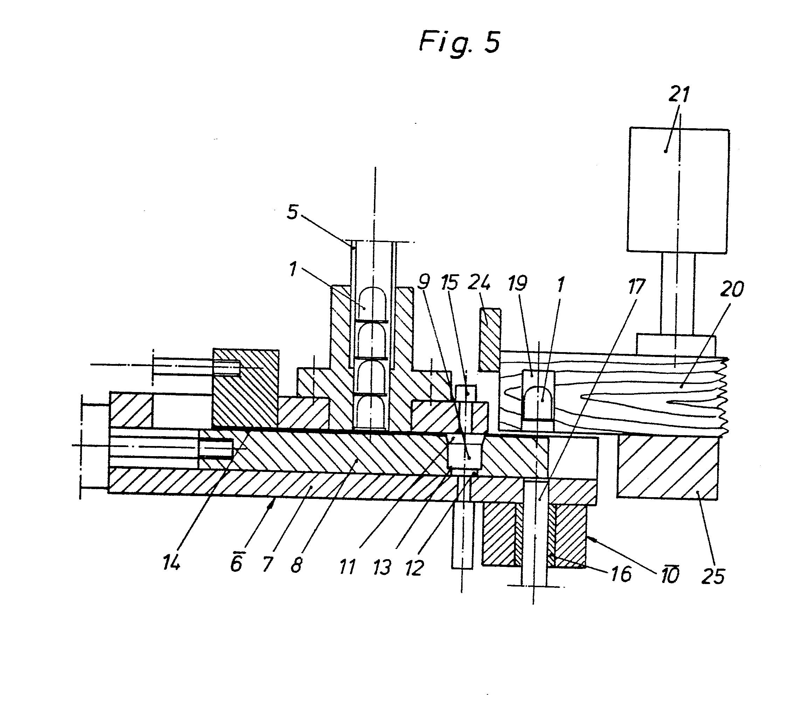

(Fig. 2-5) oder auch durch eine mittels Druckluft über den Druckluftanschluß 18' betätigbare Düse 18. Hierbei entspricht die obere Größe des Einschubstößels 17 und der Düsenaustritt annähernd der Größe der Bodenöffnung 12 der Leimperlenaufnahme 9.

Die Leimperlenaufnahme 9 des Vereinzelungsschiebers 8 besitzt eine zum Fallrohr weisende konische Aufweitung 11 und auf der gegenüberliegenden Seite eine im Durchmesser kleinere Bodenöffnung 12, wobei zwischen der Wandung der Leimperlenaufnahme 9 und der Bodenöffnung 12 ein Absatz 13 gebildet ist. Im Fallrohr 5 ist ein Sperrschieber 14 angeordnet. Durch den Sperrschieber 14 wird erreicht, daß jeweils nur eine Leimperle 1 in die Leimperlenaufnahme 9 fällt bzw. beim Verschieben der Leimperle 1 mittels Vereinzelungsschieber 8 keine Reibung mit der zuunterst liegenden Leimperle 1 im Fallrohr 5 auftritt. Im feststehenden Teil 7 der Vereinzelungsvorrichtung 6 ist zwischen dem Fallrohr 5 und der Einschubvorrichtung 10 eine mechanische oder optische Kontrolleinrichtung 15 zur Überprüfung der Leimperlenaufnahme 9 angeordnet.

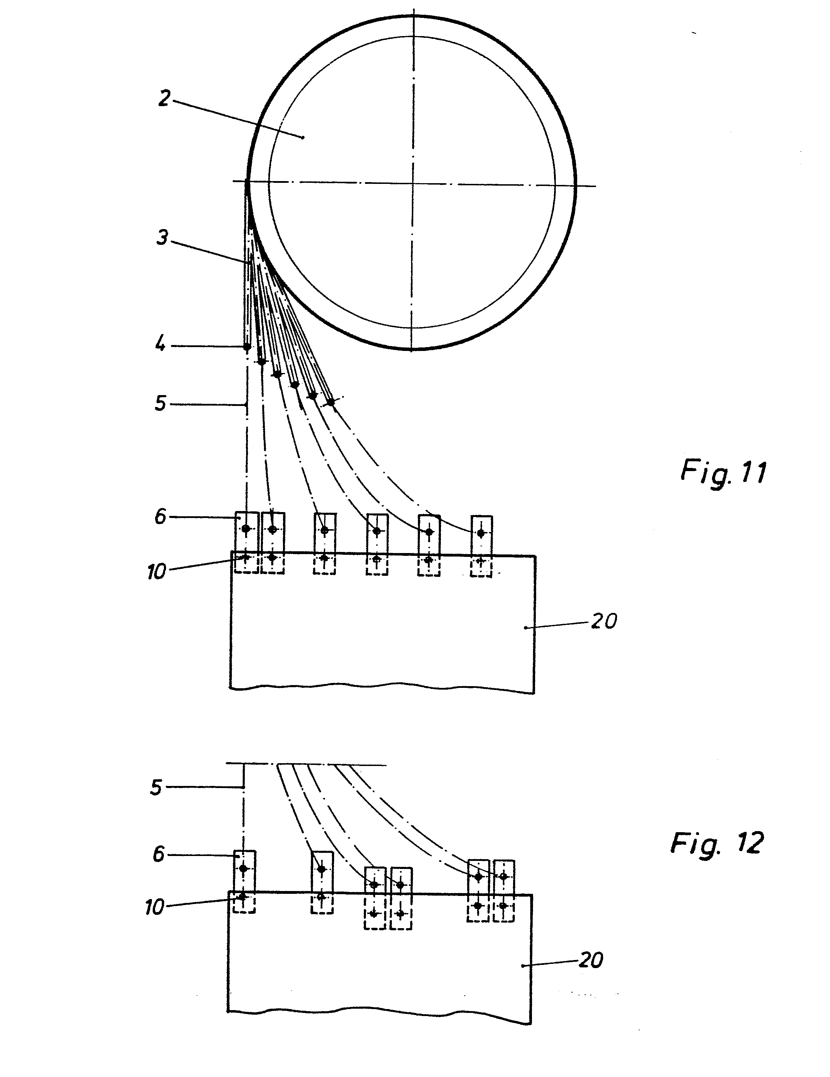

Zur lagerichtigen Stellung des Möbelwerkteils 20 auf der Werkteilauflage 25 kann das Möbelwerkteil 20 gegen einen Anschlag 24 anschlagen und/oder durch eine Festspannvorrichtung 21 gehaltert sein. Das Einbringen der Leimperlen 1 in die Möbelwerkteile 20 kann vertikal von oben oder von unten oder auch horizontal erfolgen. Wie aus Fig. 11 und 12 erkennbar ist, können mehrere Ver-

einzelungsvorrichtungen 6 mit den dazugehörigen Einschubvorrichtungen 10 zu einer Baueinheit zusammengeschlossen sein.

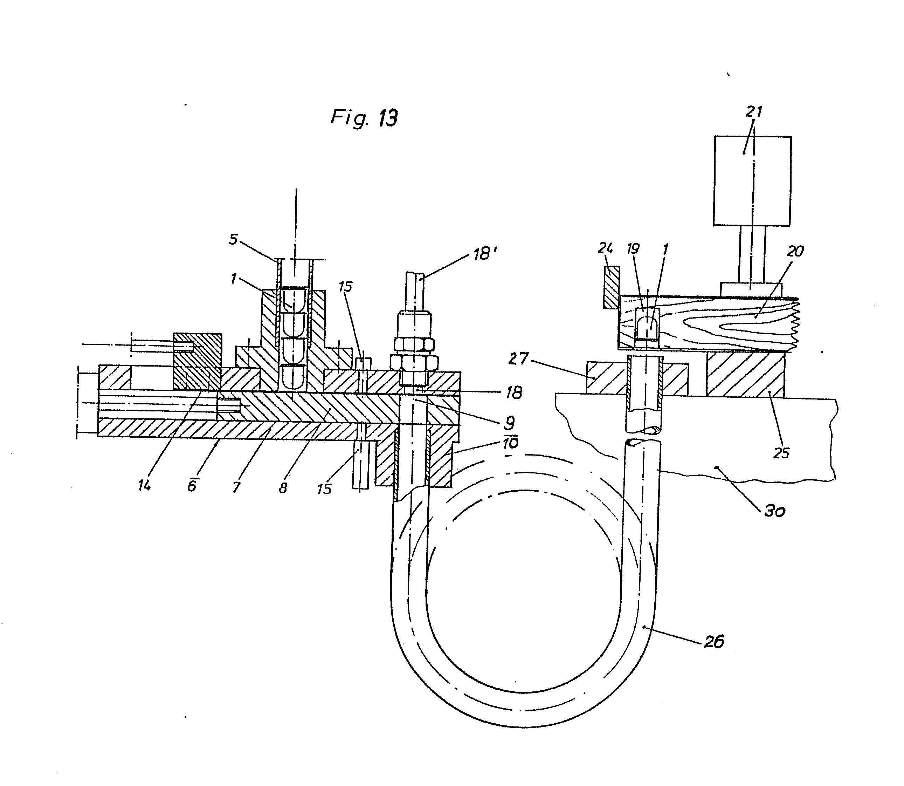

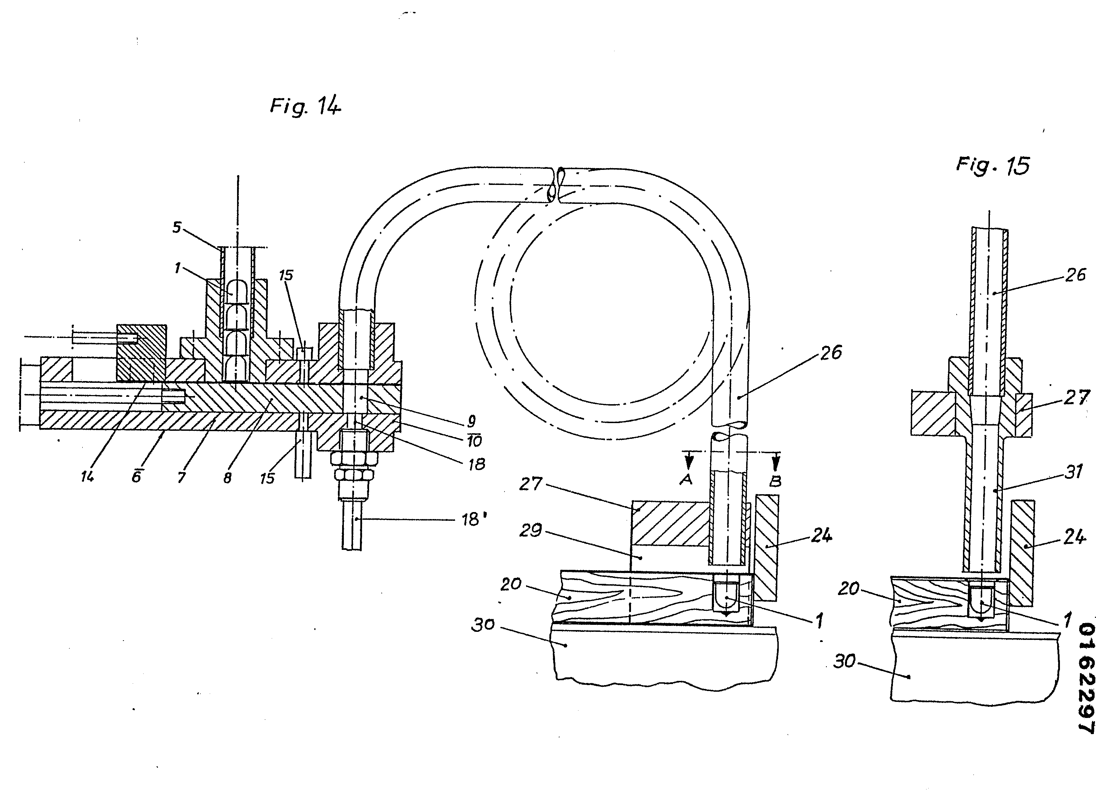

An die Einschubvorrichtung 10 schließt sich gemäß Fig. 13 und 14 ein flexibler Schlauch 26 an, der in eine Verteilerleiste 27 oder in eine starre Enddüse 31 eingeklemmt ist. Der Schlauch 26 kann hierbei in Schlaufenform angeordnet sein. Unter Verwendung eines flexiblen Schlauches 26 besteht die Möglichkeit, die Leimperlen 1 von unten oder oben oder auch horizontal in die zylindrischen Bohrungen 19 des Möbelteils 20 einzubringen.

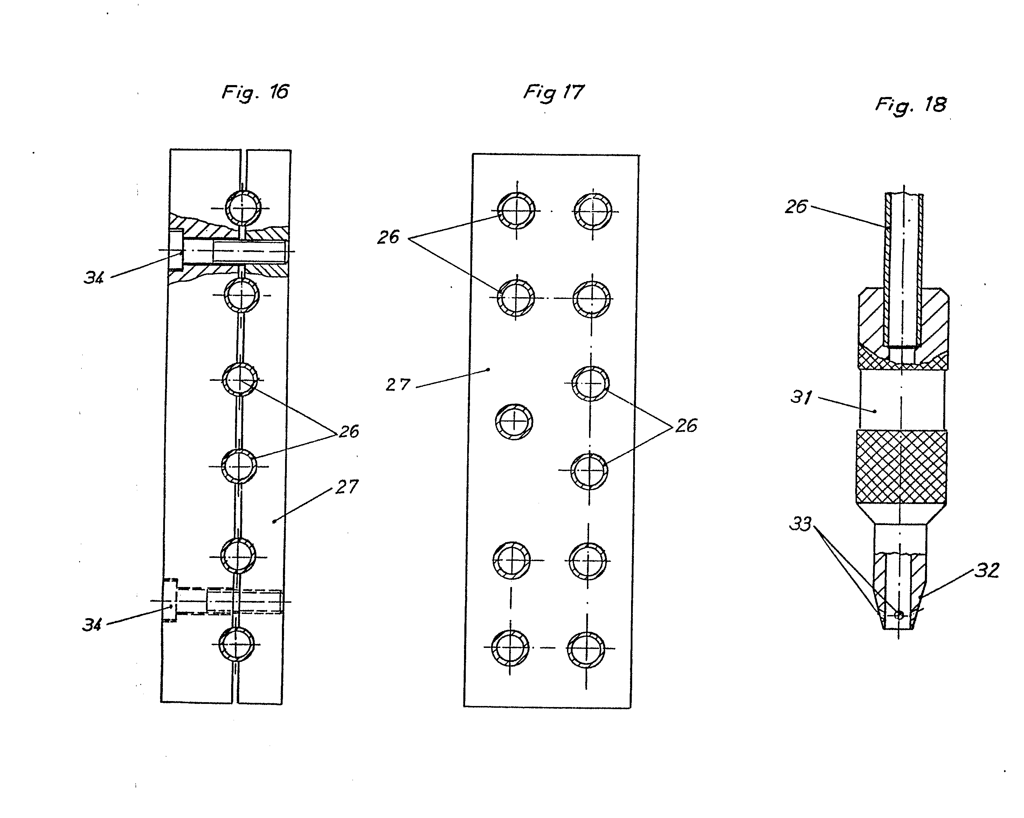

Die Verteilerleiste 27 ist auswechselbar direkt am Maschinenständer 30 (Fig. 13) oder indirekt über eine Befestigung 29 (Fig. 14) am Maschinenständer 30 befestigt. In der Verteilerleiste 27 sind entsprechend der im Möbelwerkteil 20 vorhandenen zylindrischen Bohrungen 19 Bohrlöcher 28 vorgesehen. In den Fig. 16 und 17 sind Möglichkeiten der Bohrlochanordnung in Verteilerleisten 27 dargestellt. Um das Einklemmen der Enden der flexiblen Schläuche 26 zu erleichtern, kann die Verteilerleiste 27 in Längsrichtung mittig geteilt sein und in jeder Hälfte der Verteilerleiste 27 zueinander gerichtete gleichgroße halbkreisförmige Bohrungen angeordnet sein. Durch Spannschrauben 34 werden die beiden Hälften der Verteilerleiste 27 nach dem Einlegen der Schläuche 26 zu einer Einheit zusammengedrückt.

In Fig. 15 ist eine starre Enddüse 31 dargestellt, in der ein Schlauch 26 eingeklemmt ist. Eine Variante der Enddüse 31 zeigt Fig. 18, die sich vorteilhafterweise als Handgerät verwenden läßt. Bei dieser Enddüse 31 ist am freien Ende eine Zentrieranordnung 32 angeordnet, die kegelstumpfförmig verläuft. Die Zentrieranordnung 32 läßt sich auf bzw. in die zylindirsche Bohrung 19 des Möbelwerkteils 20 setzen, so daß ein exaktes Einblasen der Leimperle 1 garantiert ist. Um beim Einblasen der Leimperle 1 einen Luftstau zu vermeiden, sind in der Enddüse 31 und/oder in der Zentrieranordnung 32 Öffnungen 33 zur Entweichung der Luft angeordnet.

Beim automatischen Weitertransport des mit Leimperlen 1 versehenen Möbelwerkteils 20 aus dem Bereich der Einblasstellung heraus wird der Anschlag 24 gemäß Fig. 14 aus der Flucht des Verschiebeweges herausgefahren.

- Patentansprüche -

- 10 -

_9a_
- ~~17~~ -

Aufstellung der Bezugszeichen
(529/59-5)

| | |
|---|---|
| 1 | Leimperle |
| 2 | Vibrationsförderer |
| 3 | Führungskanal |
| 4 | Fallposition |
| 5 | Fallrohr |
| 6 | Vereinzelungsvorrichtung |
| 7 | feststehender Teil von 6 |
| 8 | Vereinzelungsschieber |
| 9 | Leimperlenaufnahme |
| 10 | Einschubvorrichtung |
| 11 | konische Aufweitung von 9 |
| 12 | Bodenöffnung |
| 13 | Absatz |
| 14 | Sperrschieber |
| 15 | Kontrolleinrichtung |
| 16 | Führung |
| 17 | Einschubstößel |
| 18 | Düse |
| 18' | Druckluftanschluß |
| 19 | zylindrische Bohrung |
| 20 | Möbelwerkteil |
| 21 | Festspannvorrichtung |
| 22 | Pneumatikzylinder |
| 23 | Dübel |
| 24 | Anschlag |
| 25 | Werkteilauflage |
| 26 | Schlauch |
| 27 | Verteilerleiste |
| 28 | Bohrlöcher von 27 |
| 29 | Befestigung für 27 |
| 30 | Maschinenständer |
| 31 | Enddüse |
| 32 | Zentrieranordnung |
| 33 | Öffnungen in 31/32 |
| 34 | Spannschraube |

Patentansprüche:

1. Verfahren zum Einbringen von Leim in zylindrische Bohrungen (19) von zu verbindenden Möbelteilen (20), dadurch gekennzeichnet, daß zunächst der in einer leicht zerstörbaren Hülle hermetisch eingeschlossene Leim als selbständige Leimperle (1) einem Vibrationsförderer (2) zugeführt wird, in dem die Leimperlen (1) ausgerichtet und hintereinanderliegend bzw. übereinanderliegend einer Vereinzelungsvorrichtung (6) zugeführt werden, über die jede Leimperle (1) einzeln in eine zylindrische Bohrung (19) eines Möbelwerkteiles (20) eingedrückt, eingepreßt oder eingeblasen wird.

2. Vorrichtung zur Durchführung des Verfahrens nach Anspruch 1, dadurch gekennzeichnet, daß ein zur Aufnahme hintereinander- oder aufeinanderliegender Leimperlen (1) dienendes Fallrohr (5) senkrecht auf einer Vereinzelungsvorrichtung (6) angeordnet ist, die aus einem feststehenden Teil (7) und einem beweglich darin geführten Vereinzelungsschieber (8) besteht, der eine entsprechend ausgebildete Ausnehmung (9) zur Aufnahme einer Leimperle (1) aufweist und senkrecht zur Vereinzelungsvorrichtung (6) auf der dem Fallrohr (5) gegenüberliegenden Seite versetzt eine Einschubvorrichtung (10) angeordnet ist.

3. Vorrichtung nach Anspruch 2, dadurch gekennzeichnet, daß die Leimperlenaufnahme (9) des Vereinzelungsschiebers (8) eine zum Fallrohr (5) weisende konische Aufweitung (11) und auf der gegenüberliegenden Seite eine im Durchmesser kleinere Bodenöffnung (12) aufweist.

4. Vorrichtung nach Anspruch 3, dadurch gekennzeichnet, daß zwischen der Wandung der Leimperlenaufnahme (9) und der Bodenöffnung (12) ein Absatz (13) gebildet ist.

5. Vorrichtung nach einem der Ansprüche 2 bis 4, dadurch gekennzeichnet, daß im Fallrohr (5) ein oder mehrere Sperrschieber (14) angeordnet sind.

6. Vorrichtung nach einem der Ansprüche 2 bis 5, dadurch gekennzeichnet, daß im feststehenden Teil (7) der Vereinzelungsvorrichtung (6) zwischen dem Fallrohr (5) und der Einschubvorrichtung (10) eine mechanische oder optische Kontrolleinrichtung (15) zur Überprüfung der Leimperlenaufnahme (9) angeordnet ist.

7. Vorrichtung nach einem der Ansprüche 2 bis 6, dadurch gekennzeichnet, daß die Einschubvorrichtung (10) durch einen in einer Führung (16) geführten Einschubstößel (17) gebildet ist.

8. Vorrichtung nach einem der Ansprüche 2 bis 7, dadurch gekennzeichnet, daß die obere Größe des Einschubstößels (17) annähernd der Größe der Bodenöffnung (12) der Leimperlenaufnahme (9) entspricht.

9. Vorrichtung nach einem der Ansprüche 2 bis 6, dadurch gekennzeichnet, daß die Einschubvorrichtung (10) durch eine mittels Druckluft (18') betätigbare Düse (18) gebildet ist.

10. Vorrichtung nach einem der Ansprüche 2 bis 6 und 9, dadurch gekennzeichnet, daß der Düsenaustritt annähernd der Größe der Bodenöffnung (12) der Leimperlenaufnahme (9) entspricht.

11. Vorrichtung nach einem der Ansprüche 2 bis 10, dadurch gekennzeichnet, daß mehrere Vereinzelungsvorrichtungen (6) mit dazugehörigen Einschubvorrichtungen (10) zu einer Baueinheit zusammengeschlossen sind.

12. Vorrichtung nach Anspruch 11, dadurch gekennzeichnet, daß die Vereinzelungsvorrichtungen (6) mit den dazugehörigen Einschubvorrichtungen (10) verstellbar angeordnet sind.

13. Vorrichtung nach Anspruch 11 oder 12, dadurch gekennzeichnet, daß mehrere Vereinzelungsvorrichtungen (6) über getrennte Leimperlenführungskanäle (3) und getrennte Fallrohre (5) an einen Vibrationsförderer (2) angeschlossen sind.

14. Vorrichtung nach einem der Ansprüche 2 bis 13, dadurch gekennzeichnet, daß in die Leimperlenaufnahme (9) ein Einsatzstück zur Reduzierung des Durchmessers einsetzbar ist.

15. Vorrichtung nach einem der Ansprüche 2 bis 14, dadurch gekennzeichnet, daß zur Zuführung und Einführung der Leimperlen (1) in die zylindrischen Bohrungen des Möbelteils (20) an die Einschubvorrichtung (10) ein flexibler Schlauch (26) angeordnet ist.

16. Vorrichtung nach Anspruch 15, dadurch gekennzeichnet, daß der flexible Schlauch (26) in Schlaufenform angeordnet ist.

17. Vorrichtung nach Anspruch 15 oder 16, dadurch gekennzeichnet, daß der flexible Schlauch (26) an seinen beiden Enden fest gelagert ist.

18. Vorrichtung nach einem der Ansprüche 15 bis 17, dadurch gekennzeichnet, daß der flexible Schlauch (26) an seinen beiden Enden in einer in sich starren Halterung eingeklemmt ist.

19. Vorrichtung nach einem der Ansprüche 15 bis 18, dadurch gekennzeichnet, daß der flexible Schlauch (26) an seinem der Einschubvorrichtung (10) entgegengesetzten Ende in eine Verteilerleiste (27) eingespannt ist.

20. Vorrichtung nach Anspruch 19, dadurch gekennzeichnet, daß die Verteilerleiste (27) auswechselbar angeordnet ist.

21. Vorrichtung nach Anspruch 19 oder 20, dadurch gekennzeichnet, daß die Verteilerleiste (27) unmittelbar am Maschinenständer (30) anliegend oder im Abstand davon angeordnet ist.

22. Vorrichtung nach einem der Ansprüche 19 bis 21, dadurch gekennzeichnet, daß in der Verteilerleiste (27) eine oder mehrere Reihen von Bohrlöchern (28) angeordnet sind.

23. Vorrichtung nach einem der Ansprüche 19 bis 22, dadurch gekennzeichnet, daß die Bohrlöcher (28) in unterschiedlichen Abständen angeordnet sind.

24. Vorrichtung nach einem der Ansprüche 19 bis 23, dadurch gekennzeichnet, daß die Verteilerleiste (27) in Längsrichtung geteilt ist und in jedem Teil der Verteilerleiste (27) zueinander gerichtete gleichgroße halbkreisförmige Bohrungen angeordnet sind.

25. Vorrichtung nach einem der Ansprüche 19 bis 24, dadurch gekennzeichnet, daß die beiden Hälften der Verteilerleiste (27) mittels einer oder mehrerer Spannschrauben (34) zu einer Einheit zusammendrückbar sind.

26. Vorrichtung nach einem der Ansprüche 19 bis 25, dadurch gekennzeichnet, daß die beiden Hälften der Verteilerleiste (27) an einer Stirnseite über ein Scharnier miteinander verbunden sind.

27. **Vorrichtung** nach einem der Ansprüche 15 bis 26, dadurch gekennzeichnet, daß der flexible Schlauch (26) an seinem der Einschubvorrichtung (10) entgegengesetzten Ende in eine starre Enddüse (31) eingeklemmt ist.

28. **Vorrichtung** nach Anspruch 27, dadurch gekennzeichnet, daß die Enddüse (31) an ihrem freien Ende eine Zentrieranordnung (32) aufweist.

29. **Vorrichtung** nach Anspruch 27 oder 28, dadurch gekennzeichnet, daß die Zentrieranordnung (32) kegelstumpfförmig verläuft.

30. **Vorrichtung** nach einem der Ansprüche 27 bis 29, dadurch gekennzeichnet, daß in der Enddüse (31) und/oder in der Zentrieranordnung (32) Öffnungen (33) zur Entweichung von Luft angeordnet sind.

31. **Vorrichtung** nach einem der Ansprüche 2 bis 30, gekennzeichnet durch die Ausbildung als Handgerät.

Fig. 1

0162297

**Fig. 2**

**Fig. 3**

**Fig. 4**

0162297

# Fig. 5

0162297

## Fig. 6

## Fig. 7

20

19

1

23

1

19

20

## Fig. 8

20

23

20

Fig. 9

Fig. 10

0162297

*Fig. 11*

*Fig. 12*

Fig. 13

Fig. 14

Fig. 15

5
1
15
26
9
10
18
14
6
7
8
15
18'

27
29
20
30
A
B
24
1

26
27
31
24
20
30
1

Fig. 16

Fig 17

Fig. 18

0162297